# EUROPEAN PATENT SPECIFICATION

(11) **EP 0 642 120 B1**
(45) Date of publication and mention of the grant of the patent: **08.07.1998**
(21) Application number: 94112027.1
(22) Date of filing: 02.08.1994
(51) Int. Cl.: G11B 5/64

(54) **Magnetic recording medium**
Magnetischer Aufzeichnungsträger
Support d'enregistrement magnétique

(30) Priority: 06.09.1993 JP 220972/93
(43) Date of publication of application: 08.03.1995
(73) Proprietor: MATSUSHITA ELECTRIC INDUSTRIAL CO., LTD., Kadoma-shi, Osaka-fu, 571 (JP)
(72) Inventor: Sugita, Ryuji, Hirakata-shi, Osaka-fu (JP); Tohma, Kiyokazu, Hirakata-shi, Osaka-fu (JP); Ishida, Tatsuaki, Sakai-shi, Osaka-fu (JP)
(74) Representative: Eisenführ, Speiser & Partner

(56) References cited:
- EP-A- 0 277 783
- EP-A- 0 548 904
- US-A- 4 837 116
- US-A- 5 110 676

## Description

### BACKGROUND OF THE INVENTION

### (Field of the Invention)

The present invention relates to a magnetic recording medium according to the preamble of claim 1.

### (Description of the Prior Art)

With the advent of the age of magnetic recording and/or reproducing apparatuses having been designed in a high density, development of a magnetic recording medium excellent in short wavelength recording/reproducing characteristic has been longed for. While the magnetic recording medium of a coated type comprising a substrate having a magnetic powder coated thereon is currently employed, various attempts have been carried out to improve characteristics to meet the requirement, but appear to have reached the limitation.

To break this limitation, a magnetic recording medium of a thin-film type comprising a thin-film magnetic layer deposited on a polymer substrate has come to be developed. This thin-film magnetic recording medium is manufactured by the use of vacuum deposition, sputtering or any other plating technique and has been found to have excellent short wavelength recording/reproducing characteristics. Use of Co, Co-Ni, Co-Ni-P, Co-O, Co-Ni-O, Co-Cr, Co-Ni-Cr and so on have been examined as material for the thin-film magnetic layer and the length of magnetic recording tape having a Co-Ni-O vapor-deposited magnetic layer has currently commercialized as a Hi-8 scheme magnetic recording tape for use with a video tape recorder having a Hi-8 scheme recording and/or reproducing capability.

K. Shinohara et al (Columnar Structure and Some Properties of Metal-Evaporated Tape, IEEE Transactions on Magnetics, Vol. Mag-20 (1984) 824-826) report on the development of metal evaporated video tapes (ME tapes) for highly competitive and innovative mass-produced VTRs. A magnetic recording layer of a Co-Ni film of 0.15 µm was prepared by vacuum roll coating in an oxygen atmosphere using a polyester substrate. The shape of the columnar grains forming the film is influenced by this deposition system which has a continuously varied system incidence and deposition rate. The anisotropic columnar structures and properties of the ME tape were investigated. Moreover, the magnetic properties of a series of films made by varying the minimum incident angle were investigated and the results of the magnetic anisotropies and different recording characteristics of different tape transport directions were presented. The still-frame life and the frictional behaviour of the ME tape did not show anisotropies for tape transport.

J. Hokkyo et al (Co-Ni Obliquely Evaporated Tape and its Magnetic and Recording Characteristics, Journal of Magnetism and Magnetic Materials Vol. 120 (1993) 281-285) describe a technology for a Co-Ni evaporated tape, a metal evaporated, or an ME tape fabricated by vacuum evaporation. The paper focuses on the magnetic properties, microstructure, recording characteristics and noise properties. The high reproduced signal output, low noise and high resolution of the ME tape obtained by using a ring head are attributed to oblique anisotropy and a particle-like structure.

US patent 5 110 676 discloses a magnetic metallic thin film type of a recording medium having particles of predetermined size that are uniformly distributed over the surface of a base layer with a magnetic metallic thin film being formed thereon. A diamond-state carbon protective film, a carbon protective layer, e.g. of a graphite, and a layer of a lubricative material are successively formed on the metallic thin film to provide lubrication and protection. As a result of surface contour modification resulting from the protrusions formed by the particles on the base layer, the contact area between the head and the recording medium is reduced. This (together with the multiple protective layers) provides greatly increased durability by comparison with prior art configurations.

Considering the recent trend to make the magnetic recording and/or reproducing apparatus compact while yet having the capability of processing a large volume of information, linear recording density and track density must be improved to cope with this trend. It is therefore the object of the invention to provide a magnetic recording medium having a high S/N ratio, particularly in the short wavelength range. It is an aspect of this object to provide a magnetic recording tape having high tape run stability and sufficient durability.

This object is attained by a magnetic recording medium as defined in claim 1. Suitable and preferred in embodiments of the magnetic recording medium are defined in the subclaims.

### SUMMARY OF THE INVENTION

The present invention provides a magnetic recording medium comprising a polymer substrate, a thin-film magnetic layer formed on the polymer substrate, and a protective layer and a lubricant layer both formed so as to overlay the magnetic layer.

In accordance with the present invention, the polymer substrate has a multiplicity of surface protuberances. The density of the surface protuberances, which have a height not smaller than 20 nm, is not greater than 2 per µm², while the density of the surface protuberances, which have a height of not smaller than 10 µm, but smaller than 20 nm, is within the range of 0.1 to 15 per µm². On the other hand, the thin-film magnetic layer has a film thickness not greater than 0.12 µm and also has an easy magnetization axis inclined relative to normal of the film surface.

With the magnetic recording medium according to the present invention, a high S/N ratio, tape run stability and a sufficient durability can be secured and, therefore, the present invention is effective to provide a highly reliable high-density recording tape.

### BRIEF DESCRIPTION OF THE DRAWINGS

This and other objects and features of the present invention will become clear from the following description taken in conjunction with preferred embodiments thereof with reference to the accompanying drawings, in which like parts are designated by like reference numerals and in which:
Fig. 1 is a schematic transverse sectional view showing the interior of a vacuum deposition apparatus used to manufacture a magnetic recording medium according to the present invention;
Fig. 2 is a diagram showing a surface configuration of a polymer substrate of the magnetic recording medium as measured by the use of STM (Scanning Tunnel Microscope);
Fig. 3 is an exaggerated diagram showing a sectional representation of the magnetic recording medium according to the present invention;
Fig. 4 is a diagram generally similar to Fig. 2, that is used to explain the diameter of surface protuberances on the magnetic recording medium of the present invention;
Fig. 5 is an exaggerated diagram showing a sectional representation of one example of a polymer substrate having surface protuberances defined by particles embedded in the polymer substrate;
Fig. 6 is an exaggerated diagram showing a sectional representation of another example of the polymer substrate having surface protuberances defined by particles bonded to the surface of the polymer substrate by the use of an emulsion or an organic bonding agent; and
Figs. 7 and 8 are diagrams similar to Fig. 3, showing different examples of the magnetic recording medium according to the present invention, respectively.

### DETAILED DESCRIPTION OF THE EMBODIMENTS

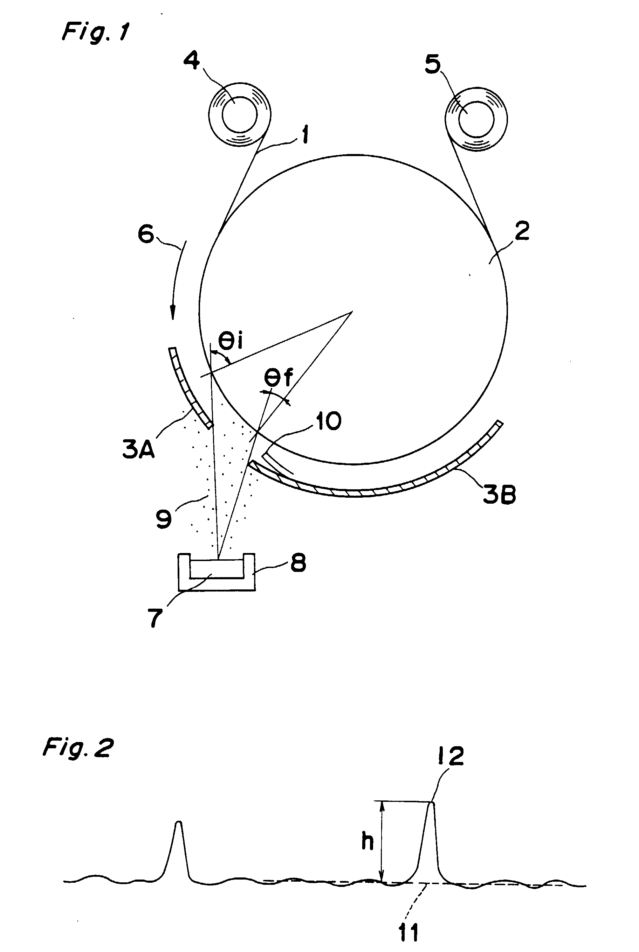

With reference to Fig. 1, a method of making a magnetic recording medium of the present invention will first be described. As shown therein, in forming a thin-film magnetic layer on a polymer substrate 1, the polymer substrate 1 is moved from a supply roll 4 towards a take-up roll 5 around a cylindrical can or drum 2 in a direction shown by the arrow 6. A source of vapor 8 is disposed generally below the cylindrical can 2 so that vaporized atoms 9 emitted from the vapor source 8 can deposit on an outer surface of the polymer substrate 1 through an opening defined between generally arcuate shielding plates 3A and 3B. Material 7 to be vaporized in the vapor source 8 may be Co or a Co-based alloy such as, for example, Co-Ni. During the film formation, oxygen is introduced through an oxygen supply port 10 into a vacuum chamber housing therein the cylindrical can 2 and the vapor source 8.

In order for the magnetic recording medium of the present invention to be manufactured, it is preferred that the incident angle θᵢ at which the vaporized atoms impinge upon the surface of the polymer substrate 1 at a location where formation of the thin-film magnetic layer starts is not greater than 85° while the incident angle θ_{f} at which the vaporized atoms impinge upon the surface of the polymer substrate 1 at a location where that formation of the thin-film magnetic layer terminates is not smaller than 45°.

The thin-film magnetic layer so made of Co-O or Co-Ni-O represents a columnar structure having an easy magnetization axis inclined relative to normal to the film surface. In other words, the easy magnetization axis does neither lie in the film surface nor parallel to normal to the film surface, but inclined relative to normal to the film surface within an orthcgonal plane normal to the polymer substrate 1 and containing the direction of incidence of the vaporized atoms upon the polymer substrate 1. In order to provide a thin-film magnetic layer having excellent characteristics, the angle of inclination of the easy magnetization axis within the orthogonal surface containing the lengthwise direction of the magnetic recording tape is preferably within the range of 40 to 85°. The lengthwise direction of the tape referred to above is the direction conforming to the longitudinal axis of the magnetic recording tape and does, during the manufacture in the manner shown in Fig. 1, lie parallel to the direction of movement of the polymer substrate 1 from the supply reel 4 towards the take-up reel 5 around the cylindrical can 2.

The polymer substrate 1 may be a film of polyethylene terephthalate, polyethylene naphthalate, polyimide, polyamide, polyether imide or any other suitable polymer, and the surface property thereof is important. Where mere improvement in S/N ratio is desired for, the use of the polymer substrate having a flat surface with as small the number of surface protuberances as possible would be sufficient, but the resultant magnetic recording tape will find difficulty in running, failing to exhibit a satisfactory tape run stability. Conversely, formation of relatively high protuberances will result in a stabilized travel of the magnetic recording tape, but no high S/N ration can be attained.

The inventors of the present invention have examined the surface property of the polymer substrate and the thin-film magnetic layer formed thereon and have found that a mere control of either of the polymer substrate and the thin-film magnetic layer does not result in manufacture of the magnetic recording tape having both a high reliability and a high S/N ratio and that the magnetic recording tape having both the high reliability and the high S/N ratio can be obtained by simultaneously optimizing the both.

Basic conditions to accomplish this purpose in accordance with the present invention are that the polymer substrate 1 must have a multiplicity of surface protuberances, the density of the surface protuberances which have a height not smaller than 20 nm and that which have a height within the range of 10 to 20 nm being chosen to be not greater than 2 per µm², preferably not greater than 0.5 per µm², and within the range of 0.1 to 15 per µm², preferably within the range of 0.2 to 10 per µm², respectively, and that the thin-film magnetic layer must have a film thickness not greater than 0.12 µm and must also have an easy magnetization axis inclined relative to normal to the film surface.

The surface protuberances appearing on the surface of the polymer substrate can be observed by the use of any suitable high-power microscope such as STM, AFM (Atomic Force Microscope) or SEM (Scanning Electron Microscope). A surface configuration of the polymer substrate of the magnetic recording medium as measured by the use of STM is reproduced in Fig. 2. As shown therein, the height of each surface protuberance is indicated by h and is defined as measured from an average level, shown by the phantom line 11, of generally flat surface areas of the polymer substrate other than the surface protuberances to a peak 12 of each surface protuberance.

If the height and the density of the surface protuberances on the polymer substrate are smaller than those required in the present invention as discussed above, problems would arise that the resultant magnetic tape will become unstable (i.e., lack a sufficient tape run stability) when moved in a magnetic recording and/or reproducing deck because of a high coefficient of friction and/or that the durability thereof is low. In particular, the coefficient of friction tends to increase in the presence of a high humidity to such an extent as to result in difficulty in smooth travel of the magnetic recording tape. On the other hand, if the height and the density of the surface protuberances on the polymer substrate are higher than those required in the present as discussed above, not only is the magnetic anisotropy of the magnetic layer lowered, but the spacing between the medium and a magnetic recording and/or reproducing head will increase, resulting in a reduction of the S/N ratio.

The thin-film magnetic layer must be such that the scuareness ratio with respect to the lengthwise direction of the magnetic tape is not smaller than 0.85. It is to be noted that the lengthwise direction referred to above matches with the direction in which the substrate is moved during the film formation and that the squareness ratio referred to above is a ratio of the residual magnetization (remanence) relative to the saturation magnetization in a hysteresis loop exhibited by the thin-film magnetic layer in the lengthwise direction. With the thin-film magnetic layer having a squareness ratio smaller than 0.85, not only is a reproduction output low, but the durability thereof is not satisfactory. The reason that the use of the thin-film magnetic layer having the squareness ratio smaller than 0.85 gives rise to an insufficient durability appears to be as follows: In general, the greater the squareness ratio, the more uniformly oriented the crystalline particles of the thin-film magnetic layer. Since the orientation of the crystalline particles of the thin-film magnetic layer having a relatively small squareness ratio is considerably rough, it appears that the packing tends to be lowered and/or the internal stress increases to such an extent as to result in a reduction in strength of the thin film. A series of experiments conducted by the inventors of the present invention have shown that, in order to secure a sufficient durability, the squareness ratio of the thin-film magnetic layer with respect to the lengthwise direction must be not smaller than 0.85.

In order to secure the tape run stability and the durability of the thin-film magnetic layer, it is necessary to form a protective layer and a lubricant layer on a surface of the thin-film magnetic layer. The protective layer may be in the form of a film made of any of C, Al₂O₃, SiO₂, SiNₓ, CrN, BN and so on, but a diamond-like carbon film is suited therefor. This protective layer can be formed by the use of any known CVD technique or sputtering technique.

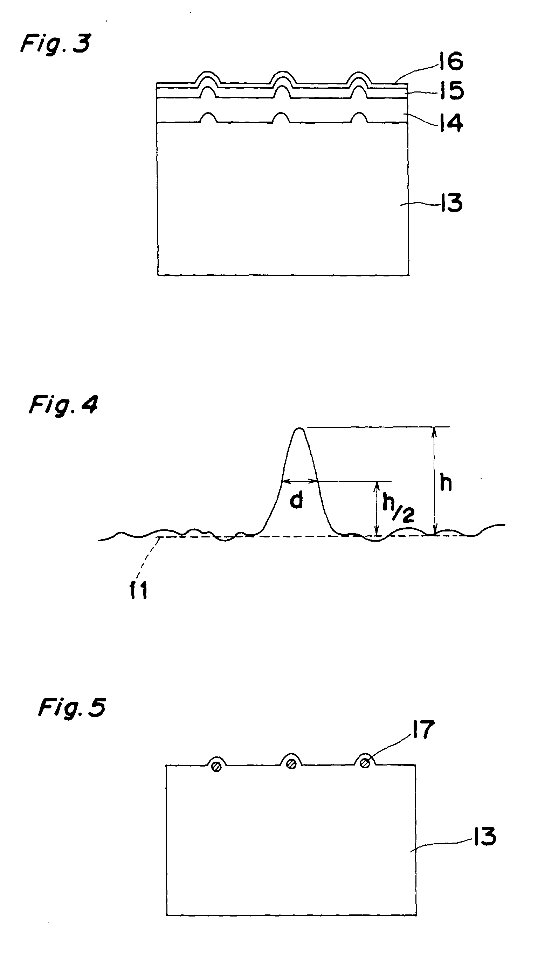

A basic structure of the magnetic recording medium of the present invention is shown in Fig. 3. The magnetic recording medium shown therein comprises a polymer substrate 13 having surface protuberances of not lower than 20 nm at a density of not greater than 2 per µm², preferably 0.5 per µm², and also having surface protuberances of not smaller than 10 nm, but smaller than 20 nm, at a density within the range of 0.1 to 15 per µm², preferably within the range of 0.2 to 10 per µm². A thin-film magnetic layer 14 of a film thickness not greater than 0.12 µm is formed on one surface of the polymer substrate 13, which is in turn covered by a protective layer 15 and a lubricant layer 16 overlaying the protective layer 15.

The thin-film magnetic layer 14 so formed generally includes a surface layer of an oxide of material for the thin-film magnetic layer 14, which layer has a thickness ranging from a few nm to 20 nm. This oxide layer is necessarily be formed during the formation of the thin-film magnetic layer 14 by introducing oxygen into the vacuum chamber. In order to produce the magnetic recording medium of the present invention, it is preferred that the oxide layer on the thin-film magnetic layer be processed to have a film thickness of not smaller than 2 nm. This can be accomplished by the use of an etching technique or a reducing technique while the entire surface of the thin-film magnetic layer is exposed to, for example, a plasma atmosphere before or during the formation of the protective layer 15. By doing so, both an increased reproduction output and an increased durability can be realized. The increase in reproduction output is attributable to a reduction in spacing loss resulting from a decrease of a non-magnetic layer whereas the increase in durability is attributable to an improvement of a force of adhesion of the protective layer to the thin-film magnetic layer. As a result of experiment, it has been made clear that no satisfactory durability can be obtained unless the film thickness of the oxide layer on the surface of the thin-film magnetic layer is reduced to a value smaller than 2 nm. The most preferred form is that the thin-film magnetic layer has no oxide layer on its surface. It is pointed out that the film thickness of the oxide layer can be measured by the Auger electron spectroscopy.

Each surface protuberance has an average diameter d which is defined in terms of the width of the respective surface protuberance measured at a level half the height h of the respective surface protuberance as shown in Fig. 4. According to the invention, 90% or more of the protuberances not smaller in height than 10 nm have an average diameter d which is equal to or smaller than 100 nm. If the average diameter d exceeds the uppermost limit of 100 nm, the steepness of the surface protuberance will lose, eventually accompanied by an increase of the coefficient of friction. This is particularly considerable at a high humidity environment.

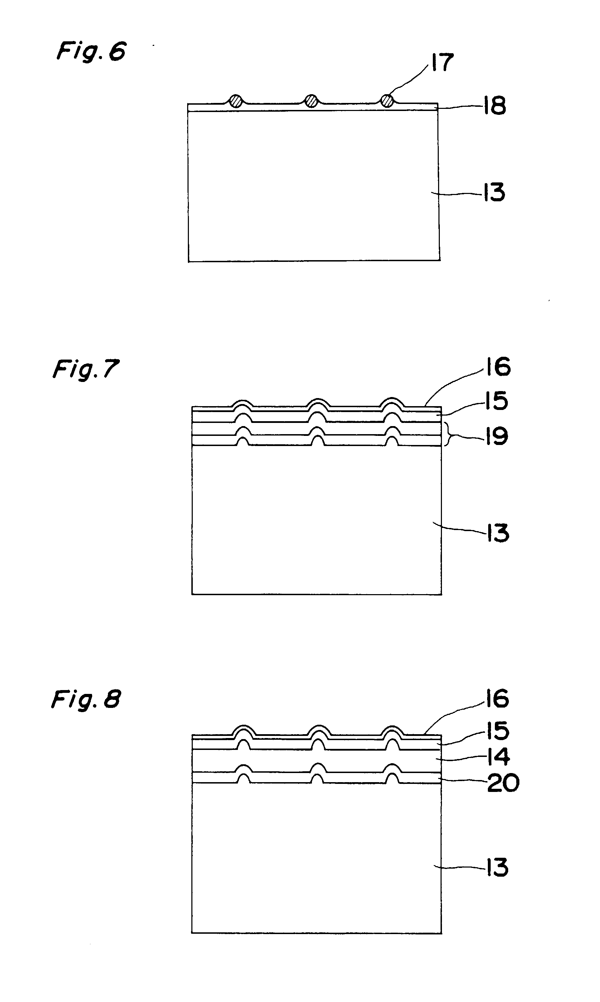

The formation of the surface protuberance on the polymer substrate may be carried out in any suitable manner. Although the present invention does not intend to be limited to the use of a specific method of forming the surface protuberance, the most stabilized recording/reproducing characteristic can be obtained if the surface protuberances are formed by particles 17 embedded in the polymer substrate 13 as shown in Fig. 5. This is because, if the particles 17 are deposited on the surface of the polymer substrate 13 by the use of an emulsion or an organic binding material 18 as shown in Fig. 6, the presence of a layer of the emulsion or the organic binding material will adversely affect the magnetic characteristic of the thin-film magnetic layer, resulting in a degradation of the recording/reproducing characteristic. It is, however, pointed out that, even though the surface protuberances are not those formed by embedding the particles in the polymer substrate, excellent effects of the present invention can be appreciated provided that the surface protuberances satisfy the requirements of the present invention in connection with the height and the density thereof.

If the film thickness of the thin-film magnetic layer 14 exceeds a limit of 0.12 µm, the particle size of crystalline particles forming the thin-film magnetic layer will increase, resulting in a roughening of the surface in the presence of the crystalline particles of increased particle size. As a result thereof, a surface characteristic of the polymer substrate will not be reflected on the surface of the thin-film magnetic layer and, therefore, even though the polymer substrate has a surface that satisfies the requirements of the present invention, the coefficient of friction will increase to such an extent as to result in difficulty in tape run.

On the other hand, an abnormal growth of the crystalline particles which takes place during the formation of the thin-film magnetic layer can advantageously be reduced if, as shown in Fig. 7, the thin-film magnetic layer is formed of two or more plies each ply having a relatively small film thickness. So far as shown in Fig. 7, the thin-film magnetic layer is a two-ply thin-film magnetic layer, that is, comprised of two plies as indicated by 19.

In the foregoing embodiment, the thin-film magnetic layer has been shown and described as formed directly on the polymer substrate. However, in the practice of the present invention, the thin-film magnetic layer 14 may be formed on the surface of the polymer substrate 13 through the intervention of a non-magnetic undercoat 20 as shown in Fig. 8. In the example shown in Fig. 8, however, the sum of the thickness of the undercoat 20 and that of the thin-film magnetic layer 14 must be not greater than 0.14 µm, or otherwise the surface of the thin-film magnetic layer will be considerably roughened failing to give rise to a desired performance. The non-magnetic undercoat 20 is suitably a Co-based oxide film of not greater than 50 nm in thickness made of, for example, CoO or CoNiO. The presence of the non-magnetic undercoat 20 is effective to improve the reproduction output and noises. Even in this example shown in Fig. 8, both surfaces of the polymer substrate 13 and the thin-film magnetic layer 14 must satisfy the foregoing requirements and, at the same time, the use of the protective layer 15 and the lubricant layer 16 is essential.

Hereinafter, the present invention will be described by way of non-limiting examples.

Using the vacuum deposition apparatus of a basic structure shown in Fig. 1, the Co-O film was formed on the polymer substrate 1 of 7 µm in thickness. Vapor deposition was carried out with Co employed as the vaporizable material 7 filled in the vapor source 8. The cylindrical can 2 was of 1 meter in diameter. For the high polymer substrate 1, a film of polyethylene terephthalate having SiO₂ particles embedded therein for formation of the surface protuberances was employed. The respective angles θᵢ and θ_{f} of incidence of the vaporized atoms upon the polymer substrate 1 were chosen to be 85° and 60°, respectively. During the process, the polymer substrate 1 was held at room temperatures. The oxygen supply port 10 was disposed at such a location as shown in Fig. 1 so that oxygen can be introduced into the vacuum chamber at a rate of 0.81 per minute. The average speed of film deposition was chosen to be 0.3 µm per second.

Using the foregoing conditions, various samples shown by Examples 1 to 5 and Comparisons 1 to 28 were prepared. It is, however, to be noted that, only in Example 4 and Comparisons 10 and 21, the undercoat was formed and that in any of Examples and Comparisons other than Example 4 and Comparisons 10 and 20, the thin-film magnetic layer was formed directly on the polymer substrate. It is also to be noted that the size of the surface protuberances referred to in any one of Examples 1 to 5 and Comparisons 1 to 28 refers to that of the surface protuberances formed on the polymer substrate and not those after the formation of the thin-film magnetic layer.

### Example 1 (Sample a)

* Density of the surface protuberances of 20 nm or more in height: 0.5 per µm²
* Density of the surface protuberances of 10 to less than 20 nm in height: 10 per µm²
* Average diameter of each surface protuberance of 10 nm or more in height: Not greater than 100 nm in 90% or more of them
* Magnetic Layer: Single-ply structure of 0.1 µm in thickness
* Squareness Ratio in Lengthwise Direction: 0.9
* Thickness of Oxide Film on Surface of Magnetic Layer: 0 nm
* Protective Layer: Diamond-like carbon film of 10 nm in thickness
* Lubricant Layer: Fluorine-containing layer of 3 nm in thickness

### Example 2 (Sample b)

* Density of the surface protuberances of 20 nm or more in height: 1.5 per µm²
* Density of the surface protuberances of 10 to less than 20 nm in height: 13 per µm²
* Average diameter of each surface protuberance of 10 nm or more in height: Not greater than 100 nm in 90% or more of them
* Magnetic Layer: Single-ply structure of 0.1 µm in thickness
* Squareness Ratio in Lengthwise Direction: 0.9
* Thickness of Oxide Film on Surface of Magnetic Layer: 0 nm
* Protective Layer: Diamond-like carbon film of 10 nm in thickness
* Lubricant Layer: Fluorine-containing layer of 3 nm in thickness

### Example 3 (Sample c)

* Density of the surface protuberances of 20 nm or more in height: 0.5 per µm²
* Density of the surface protuberances of 10 to less than 20 nm in height: 10 per µm²
* Average diameter of each surface protuberance of 10 nm or more in height: Not greater than 100 nm in 90% or more of them
* Magnetic Layer: Two-ply structure with each ply of 0.05 µm in thickness
* Squareness Ratio in Lengthwise Direction: 0.9
* Thickness of Oxide Film on Surface of Magnetic Layer: 0 nm
* Protective Layer: Diamond-like carbon film of 10 nm in thickness
* Lubricant Layer: Fluorine-containing layer of 3 nm in thickness

### Example 4 (Sample d)

* Density of the surface protuberances of 20 nm or more in height: 0.5 per µm²
* Density of the surface protuberances of 10 to less than 20 nm in height: 10 per µm²
* Average diameter of each surface protuberance of 10 nm or more in height: Not greater than 100 nm in 90% or more of them
* Undercoat: CoO film of 0.02 µm in thickness
* Magnetic Layer: Single-ply structure of 0.1 µm in thickness
* Squareness Ratio in Lengthwise Direction: 0.9
* Thickness of Oxide Film on Surface of Magnetic Layer: 0 nm
* Protective Layer: Diamond-like carbon film of 10 nm in thickness
* Lubricant Layer: Fluorine-containing layer of 3 nm in thickness

### Example 5 (Sample e)

* Density of the surface protuberances of 20 nm or more in height: 0.5 per µm²
* Density of the surface protuberances of 10 to less than 20 nm in height: 0.2 per µm²
* Average diameter of each surface protuberance of 10 nm or more in height: Not greater than 100 nm in 90% or more of them
* Magnetic Layer: Single-ply structure of 0.1 µm in thickness
* Squareness Ratio in Lengthwise Direction: 0.9
* Thickness of Oxide Film on Surface of Magnetic Layer: 0 nm
* Protective Layer: Diamond-like carbon film of 10 nm in thickness
* Lubricant Layer: Fluorine-containing layer of 3 nm in thickness

### Comparison 1 (Sample f)

* Density of the surface protuberances of 20 nm or more in height: 0.5 per µm²
* Density of the surface protuberances of 10 to less than 20 nm in height: 0.05 per µm²
* Average diameter of each surface protuberance of 10 nm or more in height: Not greater than 100 nm in 90% or more of them
* Magnetic Layer: Single-ply structure of 0.1 µm in thickness
* Squareness Ratio in Lengthwise Direction: 0.9
* Thickness of Oxide Film on Surface of Magnetic Layer: 0 nm
* Protective Layer: Diamond-like carbon film of 10 nm in thickness
* Lubricant Layer: Fluorine-containing layer of 3 nm in thickness

### Comparison 2 (Sample g)

* Density of the surface protuberances of 20 nm or more in height: 0.5 per µm²
* Density of the surface protuberances of 10 to less than 20 nm in height: 20 per µm²
* Average diameter of each surface protuberance of 10 nm or more in height: Not greater than 100 nm in 90% or more of them
* Magnetic Layer: Single-ply structure of 0.1 µm in thickness
* Squareness Ratio in Lengthwise Direction: 0.9
* Thickness of Oxide Film on Surface of Magnetic Layer: 0 nm
* Protective Layer: Diamond-like carbon film of 10 nm in thickness
* Lubricant Layer: Fluorine-containing layer of 3 nm in thickness

### Comparison 3 (Sample h)

* Density of the surface protuberances of 20 nm or more in height: 3 per µm²
* Density of the surface protuberances of 10 to less than 20 nm in height: 10 per µm²
* Average diameter of each surface protuberance of 10 nm or more in height: Not greater than 100 nm in 90% or more of them
* Magnetic Layer: Single-ply structure of 0.1 µm in thickness
* Squareness Ratio in Lengthwise Direction: 0.9
* Thickness of Oxide Film on Surface of Magnetic Layer: 0 nm
* Protective Layer: Diamond-like carbon film of 10 nm in thickness
* Lubricant Layer: Fluorine-containing layer of 3 nm in thickness

### Comparison 4 (Sample i)

* Density of the surface protuberances of 20 nm or more in height: 0.5 per µm²
* Density of the surface protuberances of 10 to less than 20 nm in height: 10 per µm²
* Average diameter of each surface protuberance of 10 nm or more in height: Not greater than 100 nm in 90% or more of them
* Magnetic Layer: Single-ply structure of 0.15 µm in thickness
* Squareness Ratio in Lengthwise Direction: 0.9
* Thickness of Oxide Film on Surface of Magnetic Layer: 0 nm
* Protective Layer: Diamond-like carbon film of 10 nm in thickness
* Lubricant Layer: Fluorine-containing layer of 3 nm in thickness

### Comparison 5 (Sample j)

* Density of the surface protuberances of 20 nm or more in height: 0.5 per µm²
* Density of the surface protuberances of 10 to less than 20 nm in height: 10 per µm²
* Average diameter of each surface protuberance of 10 nm or more in height: Not greater than 100 nm in 90% or more of them
* Magnetic Layer: Single-ply structure of 0.1 µm in thickness
* Squareness Ratio in Lengthwise Direction: 0.9
* Thickness of Oxide Film on Surface of Magnetic Layer: 0 nm
* Protective Layer: Not employed
* Lubricant Layer: Fluorine-containing layer of 3 nm in thickness

### Comparison 6 (Sample k)

* Density of the surface protuberances of 20 nm or more in height: 0.5 per µm²
* Density of the surface protuberances of 10 to less than 20 nm in height: 10 per µm²
* Average diameter of each surface protuberance of 10 nm or more in height: Not greater than 100 nm in 90% or more of them
* Magnetic Layer: Single-ply structure of 0.1 µm in thickness
* Squareness Ratio in Lengthwise Direction: 0.9
* Thickness of Oxide Film on Surface of Magnetic Layer: 0 nm
* Protective Layer: Diamond-like carbon film of 10 nm in thickness
* Lubricant Layer: Not employed

### Comparison 7 (Sample a')

* Density of the surface protuberances of 20 nm or more in height: 0.5 per µm²
* Density of the surface protuberances of 10 to less than 20 nm in height: 10 per µm²
* Average diameter of each surface protuberance of 10 nm or more in height: Not greater than 100 nm in 90% or more of them
* Magnetic Layer: Single-ply structure of 0.1 µm in thickness
* Squareness Ratio in Lengthwise Direction: 0.8
* Thickness of Oxide Film on Surface of Magnetic Layer: 0 nm
* Protective Layer: Diamond-like carbon film of 10 nm in thickness
* Lubricant Layer: Fluorine-containing layer of 3 nm in thickness

### Comparison 8 (Sample b')

* Density of the surface protuberances of 20 nm or more in height: 1.5 per µm²
* Density of the surface protuberances of 10 to less than 20 nm in height: 13 per µm²
* Average diameter of each surface protuberance of 10 nm or more in height: Not greater than 100 nm in 90% or more of them
* Magnetic Layer: Single-ply structure of 0.1 µm in thickness
* Squareness Ratio in Lengthwise Direction: 0.8
* Thickness of Oxide Film on Surface of Magnetic Layer: 0 nm
* Protective Layer: Diamond-like carbon film of 10 nm in thickness
* Lubricant Layer: Fluorine-containing layer of 3 nm in thickness

### Comparison 9 (Sample c')

* Density of the surface protuberances of 20 nm or more in height: 0.5 per µm²
* Density of the surface protuberances of 10 to less than 20 nm in height: 10 per µm²
* Average diameter of each surface protuberance of 10 nm or more in height: Not greater than 100 nm in 90% or more of them
* Magnetic Layer: Two-ply structure with each ply of 0.05 µm in thickness
* Squareness Ratio in Lengthwise Direction: 0.8
* Thickness of Oxide Film on Surface of Magnetic Layer: 0 nm
* Protective Layer: Diamond-like carbon film of 10 nm in thickness
* Lubricant Layer: Fluorine-containing layer of 3 nm in thickness

### Comparison 10 (Sample d')

* Density of the surface protuberances of 20 nm or more in height: 0.5 per µm²
* Density of the surface protuberances of 10 to less than 20 nm in height: 10 per µm²
* Average diameter of each surface protuberance of 10 nm or more in height: Not greater than 100 nm in 90% or more of them
* Undercoat: CoO film of 0.02 µm in thickness
* Magnetic Layer: Single-ply structure of 0.1 µm in thickness
* Squareness Ratio in Lengthwise Direction: 0.8
* Thickness of Oxide Film on Surface of Magnetic Layer: 0 nm
* Protective Layer: Diamond-like carbon film of 10 nm in thickness
* Lubricant Layer: Fluorine-containing layer of 3 nm in thickness

### Comparison 11 (Sample e')

* Density of the surface protuberances of 20 nm or more in height: 0.5 per µm²
* Density of the surface protuberances of 10 to less than 20 nm in height: 0.2 per µm²
* Average diameter of each surface protuberance of 10 nm or more in height: Not greater than 100 nm in 90% or more of them
* Magnetic Layer: Single-ply structure of 0.1 µm in thickness
* Squareness Ratio in Lengthwise Direction: 0.8
* Thickness of Oxide Film on Surface of Magnetic Layer: 0 nm
* Protective Layer: Diamond-like carbon film of 10 nm in thickness
* Lubricant Layer: Fluorine-containing layer of 3 nm in thickness

### Comparison 12 (Sample f')

* Density of the surface protuberances of 20 nm or more in height: 0.5 per µm²
* Density of the surface protuberances of 10 to less than 20 nm in height: 0.05 per µm²
* Average diameter of each surface protuberance of 10 nm or more in height: Not greater than 100 nm in 90% or more of them
* Magnetic Layer: Single-ply structure of 0.1 µm in thickness
* Squareness Ratio in Lengthwise Direction: 0.8
* Thickness of Oxide Film on Surface of Magnetic Layer: 0 nm
* Protective Layer: Diamond-like carbon film of 10 nm in thickness
* Lubricant Layer: Fluorine-containing layer of 3 nm in thickness

### Comparison 13 (Sample g')

* Density of the surface protuberances of 20 nm or more in height: 0.5 per µm²
* Density of the surface protuberances of 10 to less than 20 nm in height: 20 per µm²
* Average diameter of each surface protuberance of 10 nm or more in height: Not greater than 100 nm in 90% or more of them
* Magnetic Layer: Single-ply structure of 0.1 µm in thickness
* Squareness Ratio in Lengthwise Direction: 0.8
* Thickness of Cxide Film on Surface of Magnetic Layer: 0 nm
* Protective Layer: Diamond-like carbon film of 10 nm in thickness
* Lubricant Layer: Fluorine-containing layer of 3 nm in thickness

### Comparison 14 (Sample h')

* Density of the surface protuberances of 20 nm or more in height: 3 per µm²
* Density of the surface protuberances of 10 to less than 20 nm in height: 10 per µm²
* Average diameter of each surface protuberance of 10 nm or more in height: Not greater than 100 nm in 90% or more of them
* Magnetic Layer: Single-ply structure of 0.1 µm in thickness
* Squareness Ratio in Lengthwise Direction: 0.8
* Thickness of Oxide Film on Surface of Magnetic Layer: 0 nm
* Protective Layer: Diamond-like carbon film of 10 nm in thickness
* Lubricant Layer: Fluorine-containing layer of 3 nm in thickness

### Comparison 15 (Sample i')

* Density of the surface protuberances of 20 nm or more in height: 0.5 per µm²
* Density of the surface protuberances of 10 to less than 20 nm in height: 10 per µm²
* Average diameter of each surface protuberance of 10 nm or more in height: Not greater than 100 nm in 90% or more of them
* Magnetic Layer: Single-ply structure of 0.15 µm in thickness
* Squareness Ratio in Lengthwise Direction: 0.8
* Thickness of Oxide Film on Surface of Magnetic Layer: 0 nm
* Protective Layer: Diamond-like carbon film of 10 nm in thickness
* Lubricant Layer: Fluorine-containing layer of 3 nm in thickness

### Comparison 16 (Sample j')

* Density of the surface protuberances of 20 nm or more in height: 0.5 per µm²
* Density of the surface protuberances of 10 to less than 20 nm in height: 10 per µm²
* Average diameter of each surface protuberance of 10 nm or more in height: Not greater than 100 nm in 90% or more of them
* Magnetic Layer: Single-ply structure of 0.1 µm in thickness
* Squareness Ratio in Lengthwise Direction: 0.8
* Thickness of Oxide Film on Surface of Magnetic Layer: 0 nm
* Protective Layer: Not employed
* Lubricant Layer: Fluorine-containing layer of 3 nm in thickness

### Comparison 17 (Sample k')

* Density of the surface protuberances of 20 nm or more in height: 0.5 per µm²
* Density of the surface protuberances of 10 to less than 20 nm in height: 10 per µm²
* Average diameter of each surface protuberance of 10 nm or more in height: Not greater than 100 nm in 90% or more of them
* Magnetic Layer: Single-ply structure of 0.1 µm in thickness
* Squareness Ratio in Lengthwise Direction: 0.8
* Thickness of Oxide Film on Surface of Magnetic Layer: 0 nm
* Protective Layer: Diamond-like carbon film of 10 nm in thickness
* Lubricant Layer: Not employed

### Comparison 18 (Sample a")

* Density of the surface protuberances of 20 nm or more in height: 0.5 per µm²
* Density of the surface protuberances of 10 to less than 20 nm in height: 10 per µm²
* Average diameter of each surface protuberance of 10 nm or more in height: Not greater than 100 nm in 90% or more of them
* Magnetic Layer: Single-Ply structure of 0.1 µm in thickness
* Squareness Ratio in Lengthwise Direction: 0.9
* Thickness of Oxide Film on Surface of Magnetic Layer: 5 nm
* Protective Layer: Diamond-like carbon film of 10 nm in thickness
* Lubricant Layer: Fluorine-containing layer of 3 nm in thickness

### Comparison 19 (Sample b")

* Density of the surface protuberances of 20 nm or more in height: 1.5 per µm²
* Density of the surface protuberances of 10 to less than 20 nm in height: 13 per µm²
* Average diameter of each surface protuberance of 10 nm or more in height: Not greater than 100 nm in 90% or more of them
* Magnetic Layer: Single-ply structure of 0.1 µm in thickness
* Squareness Ratio in Lengthwise Direction: 0.9
* Thickness of Oxide Film on Surface of Magnetic Layer: 5 nm
* Protective Layer: Diamond-like carbon film of 10 nm in thickness
* Lubricant Layer: Fluorine-containing layer of 3 nm in thickness

### Comparison 20 (Sample c")

* Density of the surface protuberances of 20 nm or more in height: 0.5 per µm²
* Density of the surface protuberances of 10 to less than 20 nm in height: 10 per µm²
* Average diameter of each surface protuberance of 10 nm or more in height: Not greater than 100 nm in 90% or more of them
* Magnetic Layer: Two-ply structure with each ply of 0.05 µm in thickness
* Squareness Ratio in Lengthwise Direction: 0.9
* Thickness of Oxide Film on Surface of Magnetic Layer: 5 nm
* Protective Layer: Diamond-like carbon film of 10 nm in thickness
* Lubricant Layer: Fluorine-containing layer of 3 nm in thickness

### Comparison 21 (Sample d")

* Density of the surface protuberances of 20 nm or more in height: 0.5 per µm²
* Density of the surface protuberances of 10 to less than 20 nm in height: 10 per µm²
* Average diameter of each surface protuberance of 10 nm or more in height: Not greater than 100 nm in 90% or more of them
* Undercoat: CoO film of 0.02 µm in thickness
* Magnetic Layer: Single-ply structure of 0.1 µm in thickness
* Squareness Ratio in Lengthwise Direction: 0.9
* Thickness of Oxide Film on Surface of Magnetic Layer: 5 nm
* Protective Layer: Diamond-like carbon film of 10 nm in thickness
* Lubricant Layer: Fluorine-containing layer of 3 nm in thickness

### Comparison 22 (Sample e")

* Density of the surface protuberances of 20 nm or more in height: 0.5 per µm²
* Density of the surface protuberances of 10 to less than 20 nm in height: 0.2 per µm²
* Average diameter of each surface protuberance of 10 nm or more in height: Not greater than 100 nm in 90% or more of them
* Magnetic Layer: Single-ply structure of 0.1 µm in thickness
* Squareness Ratio in Lengthwise Direction: 0.9
* Thickness of Oxide Film on Surface of Magnetic Layer: 5 nm
* Protective Layer: Diamond-like carbon film of 10 nm in thickness
* Lubricant Layer: Fluorine-containing layer of 3 nm in thickness

### Comparison 23 (Sample f")

* Density of the surface protuberances of 20 nm or more in height: 0.5 per µm²
* Density of the surface protuberances of 10 to less than 20 nm in height: 0.05 per µm²
* Average diameter of each surface protuberance of 10 nm or more in height: Not greater than 100 nm in 90% or more of them
* Magnetic Layer: Single-ply structure of 0.1 µm in thickness
* Squareness Ratio in Lengthwise Direction: 0.9
* Thickness of Oxide Film on Surface of Magnetic Layer: 5 nm
* Protective Layer: Diamond-like carbon film of 10 nm in thickness
* Lubricant Layer: Fluorine-containing layer of 3 nm in thickness

### Comparison 24 (Sample g")

* Density of the surface protuberances of 20 nm or more in height: 0.5 per µm²
* Density of the surface protuberances of 10 to less than 20 nm in height: 20 per µm²
* Average diameter of each surface protuberance of 10 nm or more in height: Not greater than 100 nm in 90% or more of them
* Magnetic Layer: Single-ply structure of 0.1 µm in thickness
* Squareness Ratio in Lengthwise Direction: 0.9
* Thickness of Oxide Film on Surface of Magnetic Layer: 5 nm
* Protective Layer: Diamond-like carbon film of 10 nm in thickness
* Lubricant Layer: Fluorine-containing layer of 3 nm in thickness

### Comparison 25 (Sample h")

* Density of the surface protuberances of 20 nm or more in height: 3 per µm²
* Density of the surface protuberances of 10 to less than 20 nm in height: 10 per µm²
* Average diameter of each surface protuberance of 10 nm or more in height: Not greater than 100 nm in 90% or more of them
* Magnetic Layer: Single-ply structure of 0.1 µm in thickness
* Squareness Ratio in Lengthwise Direction: 0.9
* Thickness of Oxide Film on Surface of Magnetic Layer: 5 nm
* Protective Layer: Diamond-like carbon film of 10 nm in thickness
* Lubricant Layer: Fluorine-containing layer of 3 nm in thickness

### Comparison 26 (Sample i")

* Density of the surface protuberances of 20 nm or more in height: 0.5 per µm²
* Density of the surface protuberances of 10 to less than 20 nm in height: 10 per µm²
* Average diameter of each surface protuberance of 10 nm or more in height: Not greater than 100 nm in 90% or more of them
* Magnetic Layer: Single-ply structure of 0.15 µm in thickness
* Squareness Ratio in Lengthwise Direction: 0.9
* Thickness of Oxide Film on Surface of Magnetic Layer: 5 nm
* Protective Layer: Diamond-like carbon film of 10 nm in thickness
* Lubricant Layer: Fluorine-containing layer of 3 nm in thickness

### Comparison 27 (Sample j")

* Density of the surface protuberances of 20 nm or more in height: 0.5 per µm²
* Density of the surface protuberances of 10 to less than 20 nm in height: 10 per µm²
* Average diameter of each surface protuberance of 10 nm or more in height: Not greater than 100 nm in 90% or more of them
* Magnetic Layer: Single-ply structure of 0.1 µm in thickness
* Squareness Ratio in Lengthwise Direction: 0.9
* Thickness of Oxide Film on Surface of Magnetic Layer: 5 nm
* Protective Layer: Not employed
* Lubricant Layer: Fluorine-containing layer of 3 nm in thickness

### Comparison 28 (Sample k")

* Density of the surface protuberances of 20 nm or more in height: 0.5 per µm²
* Density of the surface protuberances of 10 to less than 20 nm in height: 10 per µm²
* Average diameter of each surface protuberance of 10 nm or more in height: Not greater than 100 nm in 90% or more of them
* Magnetic Layer: Single-ply structure of 0.1 µm in thickness
* Squareness Ratio in Lengthwise Direction: 0.9
* Thickness of Oxide Film on Surface of Magnetic Layer: 5 nm
* Protective Layer: Diamond-like carbon film of 10 nm in thickness
* Lubricant Layer: Not employed

In each of Samples a to k, the thin-film magnetic layer has the squareness ratio of 0.9 in the lengthwise direction and includes no oxide film on the surface thereof. Samples a' to k' are substantially similar in structure to Samples a to k except for the squareness ratio which reads 0.8 in Samples a' to k'. Samples a" to k" are substantially similar in structure to Samples a to k except for the film thickness of the oxide film on the surface of the thin-film magnetic layer which reads 5 nm in Samples a" to k".

All of Samples a to k, a' to k' and a" to k" were slitted into a strip-like configuration to provide respective sample tapes which were subsequently tested to determine the recording/reproducing characteristic, the tape run stability and the durability. In determining the recording/reproducing characteristic, a ring-shaped magnetic head made of Sendust and having a gap length of 0.15 µm was employed. The reproduction output represents a value at a recording wavelength of 0.4 µm and the noise represents a modulated noise given at a frequency lower by 1 MHz than the frequency of a recording signal when the signal of 0.4 µm in recording wavelength was recorded. The tape run stability was evaluated by measuring the coefficient of friction of each of the sample tapes. The durability was evaluated by turning each sample tape under a tension of 30g around a rotary cylinder in a video tape recorder equipped with the magnetic head, causing the rotary cylinder to rotate at 1,800 r.p.m while the respective sample tape was held still, recording the signal of 0.4 µm in wavelength on the respective sample tape and measuring the length of time required for the reproduction output to be lowered by 6dB.

Results of evaluation are tabulated in Tables 1 to 3. It is to be noted that in each of Tables 1 to 3, the reproduction output and the noise is shown in terms of a value relative to that exhibited by the sample a which is taken as 0 dB.

**Table 1**

| Sample | Reproduction Output (dB) | Noise (dB) | Coefficient of Friction | Durability (X minutes) |
|---|---|---|---|---|
| a | 0 | 0 | 0.2 | X > 100 |
| b | -0.5 | 0 | 0.2 | X > 100 |
| c | +0.5 | -1.5 | 0.2 | X > 100 |
| d | +1 | -0.5 | 0.2 | X > 100 |
| e | +0.5 | 0 | 0.25 | 90 |
| f | +1 | 0 | 0.4 | 8 |
| g | -1 | +1 | 0.2 | X > 100 |
| h | -2 | 0 | 0.2 | X > 100 |
| i | -0.5 | +2 | 0.35 | 50 |
| j | +1.5 | +0.5 | 0.3 | X < 1 |
| k | 0 | 0 | 0.25 | X < 1 |

**Table 2**

| Sample | Reproduction Output (dB) | Noise (dB) | Coefficient of Friction | Durability (X minutes) |
|---|---|---|---|---|
| a' | -1.5 | 0 | 0.2 | 80 |
| b' | -2.0 | 0 | 0.2 | 100 |
| c' | -0.5 | -1.5 | 0.2 | 80 |
| d' | -0.5 | -0.5 | 0.2 | 70 |
| e' | -1 | 0 | 0.25 | 60 |
| f' | -0.5 | 0 | 0.4 | 5 |
| g' | -2.5 | +1 | 0.2 | X > 100 |
| h' | -3.5 | 0 | 0.2 | 90 |
| i' | -2.5 | +2 | 0.35 | 30 |
| j' | 0 | +0.5 | 0.3 | X < 1 |
| k' | -1.5 | 0 | 0.25 | X < 1 |

**Table 3**

| Sample | Reproduction Output (dB) | Noise (dB) | Coefficient of Friction | Durability (X minutes) |
|---|---|---|---|---|
| a'' | -1 | 0 | 0.2 | 70 |
| b'' | -1.5 | 0 | 0.2 | 90 |
| c'' | -0.5 | -1.5 | 0.2 | 60 |
| d'' | 0 | -0.5 | 0.2 | 60 |
| e'' | -0.5 | 0 | 0.25 | 40 |
| f'' | 0 | 0 | 0.4 | 3 |
| g'' | -2 | +1 | 0.2 | 100 |
| h'' | -3 | 0 | 0.2 | 80 |
| i'' | -1.5 | +2 | 0.35 | 20 |
| j'' | +0.5 | +0.5 | 0.3 | 2 |
| k'' | -1 | 0 | 0.25 | X < 1 |

As can be seen from Table 1, it is clear that each of the samples a, b, c, d and e according to the present invention is excellent in all aspects of the recording/reproducing characteristic, the coefficient of friction and the durability. In particular, although since the sample b has a higher density of the surface protuberances than that of the sample a, the sample b has exhibited a reproduction output which is lower by 0.5 dB than that exhibited by the sample a, the sample b is indeed comparable to the sample a in the remaining characteristics. In other words, although even the sample b has the excellent characteristics, the sample a is superior to the sample b. The sample c has exhibited a reproduction output which is higher by 0.5 dB than that exhibited by the sample a because of the employment of the double-ply structure of the thin-film magnetic layer, but has exhibited the noise lower by 1.5 dB than that of the sample a and both the coefficient of friction and the durability which are equal to those exhibited by the sample a. The sample d has exhibited a reproduction output higher by 1 dB than that of the sample a and a noise lower by 0.5 dB than that of the sample a because of the employment of the CoO undercoat, but the remaining characteristics thereof are equal to those exhibited by the sample a. The sample e has exhibited a friction coefficient and a durability which are lower as compared with those of any one of the samples a to d, but are of an acceptable level.

With respect to the sample f, although the reproduction output exhibited thereby is higher by 1 dB than that of the sample a of the present invention, it cannot be put into practical use since the coefficient of friction is high and the durability is low. The sample g has exhibited a coefficient of friction and a durability both substantially equal to those of the sample a, but the reproduction output and the noise both exhibited by the sample g are lower by 1 dB and higher by 1dB than those of the sample a, respectively. The sample h has exhibited a reproduction output which is lower by 2 dB than that of the sample a, whereas the sample i has exhibited a reproduction output and a noise which are lower by 0.5 dB and higher by 2 dB than those of the sample a, respectively. In addition, the coefficient of friction and the durability are considerably higher and lower than those of the sample a, respectively.

With respect to the samples j and k, the durability thereof is extremely low and, therefore, they cannot be put into practical use.

Also, as can be understood from Table 2, the samples a' to k' which are substantially similar to the samples a to k except that the squareness ratio of each of the samples a' to k' reads 0.8 have shown a reproduction output which is lower by 1 to 2 dB than, and a durability which is about 2/3 of, that of the samples a to k having the rectangular ratio reading 0.9.

Yet, as can be understood from Table 3, the samples a" to k" which are substantially similar to the samples a to k, respectively, except that the oxide film on the surface of the thin-film magnetic layer has a film thickness of 5 nm have shown a reproduction output which is lower by about 1 dB than that exhibited by the samples a to k having no oxide film on the surface of the thin-film magnetic layer. However, except for the sample j", the durability exhibited by each of the samples having the oxide film of 5 nm in film thickness is about 1/2 of that exhibited by the samples having no oxide film.

Although the present invention has been described in connection with the preferred embodiment thereof with reference to the accompanying drawings, it is to be noted that various changes and modifications are apparent to those skilled in the art. For example, in the foregoing embodiment of the present invention, the thin-film magnetic layer has been described as made of Co-O, the material for the thin-film magnetic layer may not always limited thereto, but may be Co-Ni-O or may contain a small quantity of elemental additives, and even in such case, a high S/N ratio, a high tape run stability and a sufficient durability can be attained.

Also, although the substrate has been described as made of polyethylene terephthalate, any other polymer such as, for example, polyethylene naphthalate, polyimide, polyamide or polyether imide may be employed as a film of the substrate.

Again, the density of the surface protuberance, the method of forming the surface protuberances, the film thickness of the thin-film magnetic layer, the angles θᵢ and θ_{f}, the substrate temperature, the amount of oxygen introduced, the film depositing speed and other parameters are not limited to those described hereinbefore. The non-magnetic undercoat intervening between the polymer substrate and the thin-film magnetic layer may also be limited to CoO.

## Claims

1. A magnetic recording medium which comprises a polymer substrate (13) having a multiplicity of surface protuberances, a thin-film magnetic layer (14) formed on the polymer substrate (13), protective (15) and lubricant layers (16) formed on the polymer substrate (13) so as to overlay the thin-film magnetic layer (14),
**characterized in that**
(a) said polymer substrate (13) has a density of not greater than 2 per µm² of surface protuberances having a height of not smaller than 20 nm, and also has a density of within the range of 0.1 to 15 per µm² of surface protuberances having a height of not smaller than 10 nm, but smaller than 20 nm;
(b) said thin-film magnetic layer (14) has a film thickness of not greater than 0.12 µm and also has an easy magnetization axis inclined relative to normal of the film surface;
(c) said thin-film magnetic layer (14) has a squareness ratio in the lengthwise direction thereof which is not smaller than 0.85; and
(d) at least 90 % of the surface protuberances having a height of not smaller than 10 nm have an average diameter of not greater than 100 nm, said average diameter being defined as that measured at a level of 1/2 of the height of the surface protuberances.

2. A magnetic recording medium which comprises a polymer substrate (13) having a multiplicity of surface protuberances, a thin-film magnetic layer (14) formed on the polymer substrate (13), protective (15) and lubricant layers (16) formed on the polymer substrate (13) so as to overlay the thin-film magnetic layer (14),
**characterized in that**
(a) said polymer substrate (13) has a density of not greater than 2 per µm² of surface protuberances having a height of not smaller than 20 nm, and also has a density of within the range of 0.1 to 15 per µm² of surface protuberances having a height of not smaller than 10 nm, but smaller than 20 nm;
(b) a non-magnetic undercoat (20) intervenes between the polymer substrate (13) and the thin-film magnetic layer (14), wherein the sum of the thickness of the thin-film magnetic layer (14) and that of said non-magnetic undercoat (20) is not greater than 0.14 µm and said thin-film magnetic layer (14) has an easy magnetization axis inclined relative to normal of the film surface;
(c) said thin-film magnetic layer (14) has a squareness ratio in the lengthwise direction thereof which is not smaller than 0.85; and
(d) at least 90 % of the surface protuberances having a height of not smaller than 10 nm have an average diameter of not greater than 100 nm, said average diameter being defined as that measured at a level of 1/2 of the height of the surface protuberances.

3. The magnetic recording medium of claim 1 or 2, characterized in that said first mentioned density of surface protuberances is not greater than 0.5 per µm² and said second mentioned density of surface protuberance is within the range of 0.2 to 10 per µm².

4. The magnetic recording medium of anyone of the preceding claims, characterized in that said thin-film magnetic layer (14) has a film of an oxide of the thin-film magnetic layer (14), said oxide film having a film thickness of not smaller than 2 nm.

5. The magnetic recording medium of anyone of the preceding claims, characterized in that said thin-film magnetic layer (14) is of a layered structure including two or more plies.

6. The magnetic recording medium of anyone of the preceding claims, characterized by further comprising particles (17) embedded in the polymer substrate (13) to form the surface protuberances.

7. The magnetic recording medium of anyone of the preceding claims, characterized in that said protective layer (15) is a diamond-like carbon layer.

8. The magnetic recording medium of anyone of claims 2 to 7, characterized in that said non-magnetic undercoat (20) is made of a layer of Co-based oxide having a film thickness of not greater than 50 nm.

## Patentansprüche

1. Magnetisches Aufzeichnungsmedium, aufweisend ein polymeres Substrat (13) mit einer Vielzahl von Oberflächenerhebungen, eine auf dem polymeren Substrat (13) gebildete magnetische Dünnschicht (14), eine Schutzschicht (15) und eine Schmierschicht (16), die auf dem polymeren Substrat (13) gebildet sind, so daß sie auf der magnetischen Dünnschicht (14) liegen,
**dadurch gekennzeichnet**, daß
(a) das polymere Substrat (13) in bezug auf Oberflächenerhebungen, die eine Höhe von nicht kleiner als 20 nm haben, eine Dichte von nicht größer als 2 pro µm² aufweist und in bezug auf Oberflächenerhebungen, die eine Höhe von nicht kleiner als 10 nm, jedoch kleiner als 20 nm haben, eine Dichte in Bereich von 0,1 bis 15 pro µm² aufweist;
(b) die magnetische Dünnschicht (14) eine Schichtdicke von nicht größer als 0,12 µm hat und eine Achse der leichten Magnetisierbarkeit aufweist, die gegenüber der Normalen der Schichtoberfläche geneigt ist;
(c) die magnetische Dünnschicht (14) in ihrer Längsrichtung ein Rechtecksverhältnis aufweist, welches nicht kleiner ist als 0,85; und
(d) mindestens 90 % der Oberflächenerhebungen, die eine Höhe von nicht kleiner als 10 nm haben, einen mittleren Durchmesser von nicht größer als 100 nm aufweisen, wobei der mittlere Durchmesser definitionsgemäß bei einer Höhe von 1/2 der Höhe der Oberflächenerhebungen gemessen wird.

2. Magnetisches Aufzeichnungsmedium, aufweisend ein polymeres Substrat (13) mit einer Vielzahl von Oberflächenerhebungen, eine auf dem polymeren Substrat (13) gebildete magnetische Dünnschicht (14), eine Schutzschicht (15) und eine Schmierschicht (16), die auf dem polymeren Substrat (13) gebildet sind, so daß sie auf der magnetischen Dünnschicht (14) liegen,
**dadurch gekennzeichnet**, daß
(a) das polymere Substrat (13) in bezug auf Oberflächenerhebungen, die eine Höhe von nicht kleiner als 20 nm haben, eine Dichte von nicht größer als 2 pro µm² aufweist und in bezug auf Oberflächenerhebungen, die eine Höhe von nicht kleiner als 10 nm, jedoch kleiner als 20 nm haben, eine Dichte in Bereich von 0,1 bis 15 pro µm² aufweist;
(b) zwischen dem polymeren Substrat (13) und der magnetischen Dünnschicht (14) eine nichtmagnetische Unterschicht (20) eingefügt ist, wobei die Summe der Dicken der magnetischen Dünnschicht (14) und der nichtmagnetischen Unterschicht (20) nicht größer ist als 0,14 µm und die magnetische Dünnschicht (14) eine Achse der leichten Magnetisierbarkeit aufweist, die gegenüber der Normalen der Schichtoberfläche geneigt ist;
(c) die magnetische Dünnschicht (14) in ihrer Längsrichtung ein Rechtecksverhältnis aufweist, welches nicht kleiner ist als 0,85; und
(d) mindestens 90 % der Oberflächenerhebungen, die eine Höhe von nicht kleiner als 10 nm haben, einen mittleren Durchmesser von nicht größer als 100 nm aufweisen, wobei der mittlere Durchmesser definitionsgemäß bei einer Höhe von 1/2 der Höhe der Oberflächenerhebungen gemessen wird.

3. Magnetisches Aufzeichnungsmedium nach Anspruch 1 oder 2, dadurch gekennzeichnet, daß die erste erwähnte Dichte der Oberflächenerhebungen nicht größer ist als 0,5 pro µm² und die zweite erwähnte Dichte der Oberflächenerhebungen im Bereich von 0,2 bis 10 pro µm² liegt.

4. Magnetisches Aufzeichnungsmedium nach einem der vorhergehenden Ansprüche, dadurch gekennzeichnet, daß die magnetische Dünnschicht (14) eine Schicht eines Oxids der magnetischen Dünnschicht (14) aufweist, wobei die Oxidschicht eine Schichtdicke von nicht kleiner als 2 nm hat.

5. Magnetisches Aufzeichnungsmedium nach einem der vorhergehenden Ansprüche, dadurch gekennzeichnet, daß die magnetische Dünnschicht (14) eine Schichtstruktur aufweist, die zwei oder mehr Lagen hat.

6. Magnetisches Aufzeichnungsmedium nach einem der vorhergehenden Ansprüche, dadurch gekennzeichnet, daß sie außerdem Teilchen (17) aufweist, die zur Bildung der Oberflächenerhebungen in das polymere Substrat (13) eingebettet sind.

7. Magnetisches Aufzeichnungsmedium nach einem der vorhergehenden Ansprüche, dadurch gekennzeichnet, daß die Schutzschicht (15) eine diamantartige Kohlenstoffschicht ist.

8. Magnetisches Aufzeichnungsmedium nach einem der Ansprüche 2 bis 7, dadurch gekennzeichnet, daß die nichtmagnetische Unterschicht (20) aus einer Schicht eines Oxids auf Cobaltbasis hergestellt ist, die eine Schichtdicke nicht größer als 50 nm hat.

## Revendications

1. Support d'enregistrement magnétique qui comprend un substrat de polymère (13) présentant une multiplicité de protubérances en surface, une couche magnétique en film mince (14) formée sur le substrat de polymère (13), des couches protectrices (15) et lubrifiantes (16) formées sur le substrat de polymère (13) de façon à recouvrir la couche magnétique en film mince (14),
caractérisé en ce que
(a) ledit substrat de polymère (13) présente une densité qui n'est pas supérieure à 2 par µm² de protubérances en surface présentant une hauteur qui n'est pas plus petite que 20 nm, et également une densité dans la plage de 0,1 à 15 par µm² de protubérances en surface présentant une hauteur qui n'est pas plus petite que 10 nm, mais qui est plus petite que 20 nm,
(b) ladite couche magnétique en film mince (14) présente une épaisseur de film qui n'est pas supérieure à 0,12 µm et présente également un axe de magnétisation préférentiel incliné par rapport à la normale de la surface du film,
(c) ladite couche magnétique en film mince (14) présente un rapport de rectangularité dans la direction suivant la longueur de celle-ci qui n'est pas plus petit que 0,85, et
(d) au moins 90 % des protubérances en surface présentant une hauteur qui n'est pas plus petite que 10 nm présentent un diamètre moyen qui n'est pas supérieur à 100 nm, ledit diamètre moyen étant défini comme étant celui mesuré à un niveau de 1/2 de la hauteur des protubérances en surface.

2. Support d'enregistrement magnétique qui comprend un substrat de polymère (13) présentant une multiplicité de protubérances en surface, une couche magnétique en film mince (14) formée sur le substrat de polymère (13), des couches protectrices (15) et lubrifiantes (16) formées sur le substrat de polymère (13) de façon à recouvrir la couche magnétique en film mince (14),
caractérisé en ce que
(a) ledit substrat de polymère (13) présente une densité qui n'est pas supérieure à 2 par µm² de protubérances en surface présentant une hauteur qui n'est pas plus petite que 20 nm, et également présente une densité dans la plage de 0,1 à 15 par µm² de protubérances en surface présentant une hauteur qui n'est pas plus petite que 10 nm, mais est plus petite que 20 nm,
(b) une sous-couche non magnétique (20) intercalée entre le substrat de polymère (13) et la couche magnétique en film mince (14), dans laquelle la somme de l'épaisseur de la couche magnétique en film mince (14) et de celle de ladite sous-couche non magnétique (20) ne dépasse pas 0,14 µm et ladite couche magnétique en film mince (14) présente un axe de magnétisation préférentiel incliné par rapport à la normale de la surface du film,
(c) ladite couche magnétique en film mince (14) présente un rapport de rectangularité dans la direction suivant la longueur de celle-ci qui n'est pas plus petit que 0,85, et
(d) au moins 90 % des protubérances en surface présentant une hauteur qui n'est pas plus petite que 10 nm présentent un diamètre moyen qui n'est pas supérieur à 100 nm, ledit diamètre moyen étant défini comme étant celui mesuré à un niveau de 1/2 de la hauteur des protubérances en surface.

3. Support d'enregistrement magnétique selon la revendication 1 ou 2, caractérisé en ce que ladite densité mentionnée en premier des protubérances en surface n'est pas supérieure à 0,5 par µm² et ladite densité mentionnée en second des protubérances en surface est à l'intérieur de la plage de 0,2 à 10 par µm².

4. Support d'enregistrement magnétique selon l'une quelconque des revendications précédentes, caractérisé en ce que ladite couche magnétique en film mince (14) comporte un film d'un oxyde de la couche magnétique en film mince (14), ledit film d'oxyde présentant une épaisseur de film qui n'est pas plus petite que 2 nm.

5. Support d'enregistrement magnétique selon l'une quelconque des revendications précédentes, caractérisé en ce que ladite couche magnétique en film mince (14) est une structure en couches comprenant deux ou plusieurs plis.

6. Support d'enregistrement magnétique selon l'une quelconque des revendications précédentes, caractérisé en ce qu'il comprend en outre des particules (17) incorporées dans le substrat de polymère (13) afin de former les protubérances en surface.

7. Support d'enregistrement magnétique selon l'une quelconque des revendications précédentes, caractérisé en ce que ladite couche protectrice (15) est une couche de carbone sous forme de diamant.

8. Support d'enregistrement magnétique selon l'une quelconque des revendications 2 à 7, caractérisé en ce que ladite sous-couche non magnétique (20) est faite d'une couche d'oxyde à base de Co présentant une épaisseur de film qui n'est supérieure à 50 nm.
